# EUROPEAN PATENT APPLICATION

(11) **EP 2 685 465 A1**
(43) Date of publication of application: **15.01.2014**
(21) Application number: 11860445.3
(22) Date of filing: 08.03.2011
(51) Int. Cl.: H01B 7/08, H01B 7/00

(54) **FLAT CABLE AND WIRE HARNESS**

(71) Applicant: Yazaki Corporation, Tokyo 108-8333 (JP)
(72) Inventor: UEHARA Takehiko, Toyota-shi Aichi 470-1294 (JP); MURAKAMI Yoshihiro, Kosai-shi Shizuoka 431-0431 (JP); SATOU Kunihiko, Kosai-shi Shizuoka 431-0431 (JP); YAMAMOTO Masataka, Kosai-shi Shizuoka 431-0431 (JP)
(74) Representative: Grünecker, Kinkeldey, Stockmair & Schwanhäusser
(86) International application number: PCT/JP2011/055354
(87) International publication number: WO 2012/120640

(57) **Abstract**

There is provided a flat cable able to decrease the number of components and able to be small-sized, and a wiring harness provided with the flat cable. The wiring harness (1) is provided with a connector (2) and a flat cable (3). The connector (2) is provided with a connector housing (4) and a female terminal (5). The flat cable (3) is provided with: a plurality of electric wires (14); and an elongated weft (15). The weft (15) is provided with: crossing sections (15a, 15c) that are perpendicular to the plurality of electric wires (14) and that are disposed at the plurality of electric wires (14) rising any falling by a certain rule; and parallel sections (15b, 15d, 15e) that are continuous with the crossing sections (15a, 15c) and that overlap the electric wires (14a, 14b) positioned at the ends among the plurality of electric wires (14). The weft (15) and the electric wires (14, 14a, 14b) are tightly woven with each other so as to prevent the weft (15) from moving along the longitudinal direction of electric wires (14, 14a, 14b) relative to the electric wires (14, 14a, 14b).

## Description

### [Technical Field]

The present invention relates to a flat cable having a plurality of electric wires arranged in various electric machines, and a wiring harness provided with the flat cable.

### [Background Art]

In an electric machine such as a vehicle as a moving object, a wiring harness is arranged for electrically connecting various electronic devices to each other. In some cases, this wiring harness includes: a flat cable formed in a flat shape by integrating covering sections made of insulator with a connecting section made of insulator, each of the covering section covering each of conductors having the same diameter and arranged parallel to each other at regular intervals; a connector attached to ends of the conductors of this flat cable; and a corrugate tube, a protector, and the like for receiving and protecting the flat cable.

The above wiring harness is arranged in the above electric machine when the connector is fitted to a connector provided on various electronic devices. The wiring harness supplies necessary signals and the like to the various electronic devices of the above electric machine.

### [Summary of Invention]

### [Technical Problem]

The above conventional wiring harness is provided with a corrugate tube, a protector, and the like for receiving and protecting the flat cable. In this way, because the conventional wiring harness is provided with the corrugate tube and the protector independent from the flat cable, the number of components is increased, and the wiring harness becomes large-sized for receiving the flat cable in the corrugate tube and the protector.

Accordingly, an object of the present invention is to provide a flat cable able to decrease the number of components and able to be small-sized, and to provide a wiring harness provided with the flat cable.

### [Solution to Problem]

For solving the above problems, according to a first aspect of the present invention, there is provided a flat cable including:
a plurality of electric wires parallel to each other, and terminals being attached to ends thereof; and
an elongated weft provided with crossing sections perpendicular to the plurality of electric wires and rising and falling with respect to the plurality of electric wires by a certain rule, and parallel sections continuous with the crossing sections and overlapping the electric wires positioned at an edge of the plurality of electric wires,
wherein the electric wires are tightly woven with the weft so as to prevent the weft from moving along a longitudinal direction of the electric wires relative to the electric wires.

According to a second aspect of the present invention, there is provided the flat cable as described in the first aspect, wherein outer diameters of at least two electric wires among the plurality of electric wires are different from each other.

According to a third aspect of the present invention, there is provided the flat cable as described in the first or second aspect, further including a warp disposed parallel to the plurality of electric wires in between the plurality of electric wires.

According to a fourth aspect of the present invention, there is provided a wiring harness including:
a flat cable having a plurality of electric wires parallel to each other; and
a connector attached to an end of the flat cable,
wherein as the flat cable, the flat cable described in any one of the first to third aspects is provided.

According to the flat cable of the present invention described in the first aspect, because the flat cable is provided with the weft woven with the electric wires so as to prevent the weft from moving relative to the electric wires, the weft covers a periphery of the plurality of electric wires.

Further, because the flat cable is formed by weaving a plurality of electric wires and an elongated weft interlaced in a certain rule, an outer diameter and the number of the electric wires woven with the weft can be easily changed.

According to the flat cable of the present invention described in the second aspect, because the outer diameters of at least two electric wires among the plurality of electric wires are different from each other, an electric wire having a necessary diameter can be properly used.

According to the flat cable of the present invention described in the third aspect, because the warp is provided in between the plurality of electric wires, tensile stress and bending stress acting on the flat cable can be born by the warp.

According to the wiring harness of the present invention described in the fourth aspect, because the wiring harness is provided with the above flat cable, the weft covers the periphery of the plurality of electric wires at the end of the flat cable.

### [Advantageous Effects of Invention]

As explained above, according to the present invention described in the first aspect, because the weft covers the periphery of the plurality of electric wires, the weft protects the electric wires. Therefore, the plurality of electric wires, namely, the flat cable can be protected without using the corrugate tube or the protector independent from the flat cable. Therefore, the number of components of the wiring harness can be reduced. Further, because the weft is tightly woven with the electric wires so as to prevent the weft from moving, the weft tightly contacts the electric wires. Therefore, the flat cable, namely, the wiring harness provided with the flat cable can be small-sized.

Further, because the flat cable is formed by weaving a plurality of electric wires and an elongated weft interlaced in a certain rule, an outer diameter and the number of the electric wires woven with the weft can be easily changed. Therefore, the conductors having various shapes can be integrated without increasing the production cost.

According to the present invention described in the second aspect, because the electric wire having the necessary diameter can be properly used, the conductors having various shapes can be surely integrated without increasing the production cost.

According to the present invention described in the third aspect, because the tensile stress and the bending stress acting on the flat cable can be born by the warp, the mechanical strength of the flat cable can be improved.

According to the present invention described in the fourth aspect, because the wiring harness is provided with the above flat cable, the number of components of the wiring harness can be reduced, and the wiring harness can be small-sized.

### [Brief Description of Drawings]

[Fig. 1]

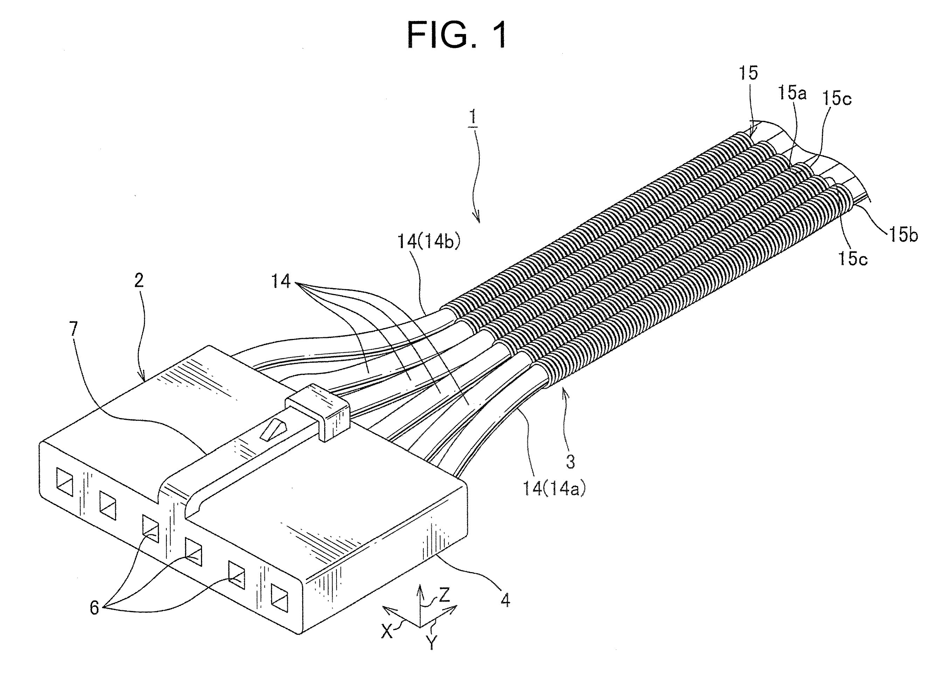

   Fig. 1 is a perspective view showing a wiring harness according to an embodiment of the present invention.
[Fig. 2]

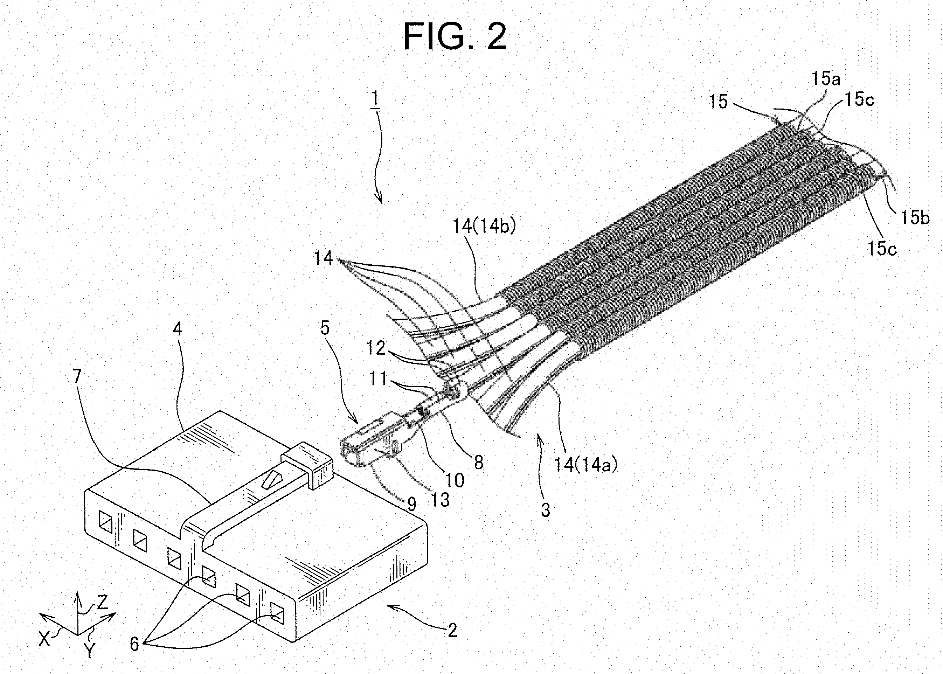

   Fig. 2 is an exploded perspective view showing a connector of the wiring harness shown in Fig. 1.
[Fig. 3]

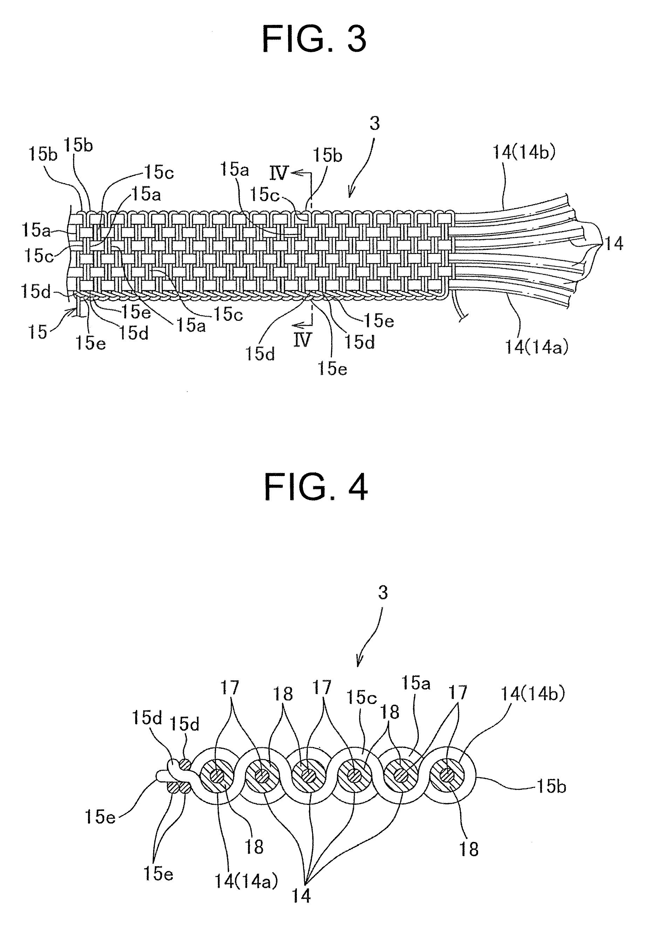

   Fig. 3 is a plan view showing a flat cable of the wiring harness shown in Fig. 1.
[Fig. 4]
   Fig. 4 is a sectional view taken along IV-IV of Fig. 3.
[Fig. 5]

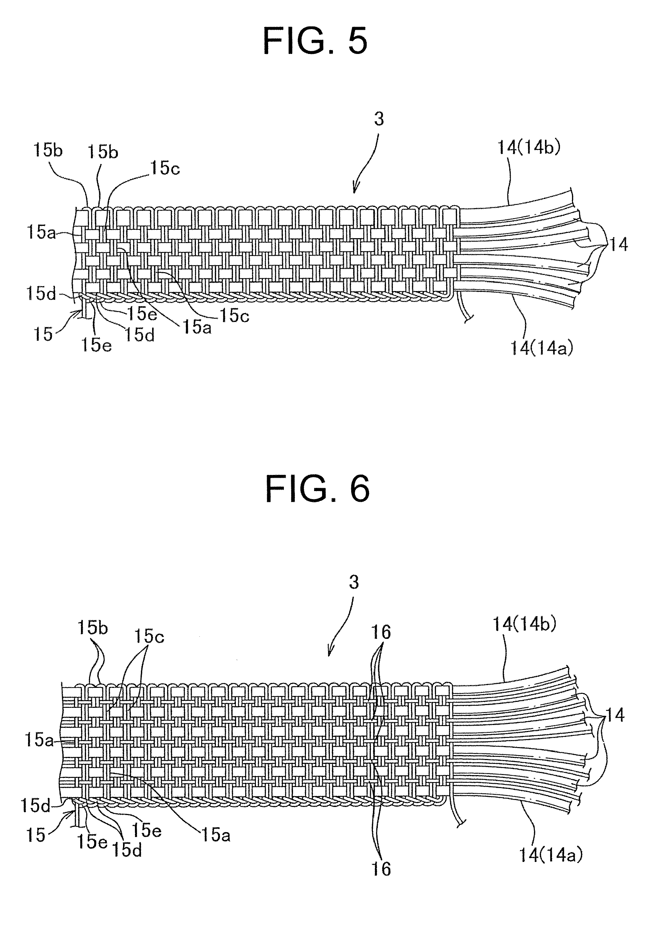

   Fig. 5 is a plan view showing a modified embodiment of the flat cable shown in Fig. 3.
[Fig. 6]
   Fig. 6 is a plan view showing another modified embodiment of the flat cable shown in Fig. 3.

### [Description of Embodiments]

A wiring harness and a flat cable according to an embodiment of the present invention will be explained with reference to Figs. 1 to 4.

A wiring harness 1 according to an embodiment of the present invention is arranged in a vehicle as an electric machine, and electrically connects various electronic devices mounted on the vehicle to each other. As shown in Figs. 1 and 2, the wiring harness 1 includes a connector 2 and a flat cable 3.

As shown in Fig. 2, the connector 2 includes: a connector housing 4; and a plurality of female terminals 5 (hereinafter only referred to as female terminal and Fig. 2 shows only one terminal and others are omitted). Incidentally, in Fig. 1, hereinafter, a longitudinal direction of a later-described electric wire 14 and a terminal receiving chamber 6 is referred to as a depth direction, and denoted by an arrow Y. A direction perpendicular to the depth direction Y and an arranging direction of a later-described plurality of terminal receiving chambers 6 is referred to as a width direction, and denoted by an arrow X. A direction perpendicular to both the depth direction Y and the width direction X is referred to as a thickness direction, and denoted by an arrow Z.

The connector housing 4 is made of insulating synthetic resin, and formed in a tubular (boxy) shape. A plurality of terminal receiving chambers 6 is provided at an inside of the connector housing 4, and a locking arm 7 is provided on an outer surface of the connector housing 4. The terminal receiving chamber 6 is a straight space (hole). A longitudinal direction of the terminal receiving chamber 6 is parallel to the depth direction Y. The plurality of terminal receiving chambers 6 is arranged parallel to each other. Both ends of the terminal receiving chamber 6 are opened on the outer surface of the connector housing 4. The locking arm 7 is fitted to a connector housing of a mating connector.

After an electric wire 14 is attached to a later-described wire connecting portion 8 of the female terminal 5, the female terminal 5 is received in the terminal receiving chamber 6. Then, the female terminal 5 is electrically connected to a core wire 17 of the electric wire 14, namely, to the electric wire 14.

As shown in Fig. 2, the female terminal 5 is made of conductive plate metal, and integrally includes: a wire connecting portion 8; and an electric contact portion 9. The wire connecting portion 8 integrally includes: a flat-plate-shaped bottom plate 10; a pair of core wire 17 caulking pieces 11; and a pair of cover caulking pieces 12. The bottom plate 10 is formed in a rectangular shape in plan view. The pair of core wire 17 caulking pieces 11 is provided at the center in a longitudinal direction of the bottom plate 10. The pair of core wire 17 caulking pieces 11 stands up from both edges in a width direction of the bottom plate 10. The pair of core 17 wire caulking pieces 11 is bent so that an edge away from the bottom plate 10 approaches the bottom plate 10, and holds the core wire 17 with the bottom plate 10 to caulk the core wire 17.

The pair of cover caulking pieces 12 is provided at one end in a longitudinal direction of the bottom plate 10. The pair of cover caulking pieces 12 stands up from both edges in a width direction of the bottom plate 10. The pair of cover caulking pieces 12 is bent so that an edge away from the bottom plate 10 approaches the bottom plate 10, and holds the cover 18, namely, the electric wire 14 with the bottom plate 10 to caulk the electric wire 14.

When the pair of core wire 17 caulking pieces 11 caulks the core wire 17, and the pair of cover caulking pieces 12 caulks the cover 18, the wire connecting portion 8 is electrically and mechanically connected to the electric wire 14. A longitudinal direction of the wire connecting portion 8 and a longitudinal direction of the electric wire 14 connected to the wire connecting portion 8 are parallel to each other.

As shown in Fig. 2, the electric contact portion 9 integrally includes: a tubular shaped portion 13; and a not-shown spring piece provided in the tubular shaped portion 13. The tubular shaped portion 13 is continued to the bottom plate 10 of the wire connecting portion 8. The spring piece holds a tab of a mating male terminal (hereinafter referred to as male terminal) inserted into the tubular shaped portion 13 with an inner surface of the tubular shaped portion 13 to electrically connect the male and female terminals.

When the female terminal 5 attached to an end of the electric wire 14 is received in the terminal receiving chamber 6 of the connector housing 4, the above connector 2 is assembled. Then, the connector 2 is fitted to a mating connector. Incidentally, in the embodiment shown in Fig. 2, only the connector 2 attached to one end of the flat cable 3 is shown. However, according to the present invention, the connector 2 is properly attached to a necessary position such as the other end of the flat cable 3.

As shown in Figs. 1 to 4, the flat cable 3 includes: a plurality of electric wires 14 arranged parallel to each other with a gap; and an elongated weft 15. Namely, the electric wires 14 adjacent to each other among the plurality of electric wires 14 are disposed with a gap therebetween.

As shown in Fig. 4, the electric wire 14 includes: a conductive core wire 17; and an insulating cover 18. The core wire 17 is defined by bundling a plurality of element wires. The element wire is made of metal such as copper. The cover 18 is made of insulating synthetic resin such as polyvinyl chloride or polyolefin resin, and covers the core wire 17. Incidentally, in this embodiment, outer diameters of the plurality of electric wires 14 are the same.

The weft 15 is formed in a deformable long filament. As the material of the weft 15, one or more materials can be properly selected and used from among the materials used for defining a conventional woven (fabric) such as polyester, polyamide resin, polypropylene, cotton, carbon, metal, or the like.

As shown in Fig. 3, at ends of the plurality of electric wires 14, a crossing section 15a of the weft 15 alternately rising and falling, and crossing with respect to the plurality of electric wires 14 started from the electric wire 14 disposed at the lowest end (hereinafter denoted by reference sign 14a) among the plurality of the electric wire 14 is formed. Then, a parallel section 15b overlapped with the electric wire 14 disposed at the highest end (hereinafter denoted by reference sign 14b) is formed. Then, a second crossing section 15c (corresponding to the crossing section) alternately rising and falling, and crossing with respect to the plurality of electric wires 14 started from the electric wire 14b is formed. Then, a second parallel section 15d (corresponding to the parallel section) overlapped with the electric wire 14a is formed and caught by the crossing section 15a. Then, a third parallel portion (corresponding to the parallel section) again overlapped with the electric wire 14a is formed. Thereby, the crossing section alternately rising and falling from the electric wire 14a and crossing to the electric wires 14 is formed. The weft 15 is crossed with respect to the plurality of electric wires 14, 14a, 14b by a certain rule to be woven, by forming sequentially and repeatedly the crossing section 15a, the parallel section 15b, the second crossing section 15c, the second parallel section 15d, the third parallel section 15e, and the crossing section 15a, and by catching the second parallel section 15d together with the crossing section 15a by the second crossing section 15c.

In this way, when alternately rising and falling with respect to the plurality of electric wires 14, 14a, 14b, the crossing sections 15a, 15b are arranged rising and falling by a certain rule. Further, the crossing sections 15a, 15c adjacent to each other are arranged with a gap therebetween. At each of the crossing sections 15a, 15c, the weft 15 is perpendicular to (crossing) the longitudinal direction of the electric wires 14, 14a, 14b. When the weft 15 is woven with respect to only the plurality of electric wires 14, 14a, 14b in the above described manner, the plurality of electric wires 14, 14a, 14b are arranged in the same plane with a gap therebetween and parallel to each other, and fixed to each other.

Though the above electric wires 14, 14a, 14b are arranged with a gap therebetween, and the crossing sections 15a, 15c are arranged with a gap therebetween, the weft 15 and the electric wires 14, 14a, 14b are tightly woven with each other so as to prevent the weft 15 from moving along the longitudinal direction of electric wires 14, 14a, 14b relative to the electric wires 14, 14a, 14b. Incidentally, according to the present invention, the phrase "the weft 15 and the electric wires 14, 14a, 14b are tightly woven with each other" indicates that the weft 15 is prevented from moving along the longitudinal direction of electric wires 14, 14a, 14b relative to the electric wires 14, 14a, 14b.

The above wiring harness 1 is assembled as follows. First, the above plurality of electric wires 14, 14a, 14b having a specific length is arranged parallel to each other, and the weft 15 is tightly woven with respect to the plurality of electric wires 14, 14a, 14b in a manner that the crossing section 15a, the parallel section 15b, the second crossing section 15c, the second parallel section 15d the third parallel section 15e, and the crossing section 15a are sequentially and repeatedly formed. In this way, as shown in Fig. 3, the flat cable 3 is assembled. Then, the female terminals 5 are attached to ends of the electric wires 14, 14a, 14b of the flat cable 3, and inserted into the terminal receiving chambers 6 of the connector housing 4. Thereby, the above wiring harness 1 is assembled. The wiring harness 1 assembled in this way is arranged in a vehicle, and the connector 2 is fitted to a mating connector provided on electronic devices mounted on the vehicle.

According to this embodiment, the flat cable 3 is provided with the weft 15 woven with respect to the plurality of electric wires 14, 14a, 14b so as to prevent the weft 15 from moving relative to the plurality of electric wires 14, 14a, 14b. Therefore, as shown in Fig. 4, the weft 15 covers a periphery of the plurality of electric wires 14, 14a, 14b. Therefore, the plurality of electric wires 14, 14a, 14b, namely, the flat cable 3 can be protected without using the corrugate tube or the protector independent from the flat cable 3. Therefore, the number of components of the wiring harness 1 can be reduced. Further, because the weft 15 is tightly woven with the electric wires 14, 14a, 14b so as to prevent the weft 15 from moving, the weft 15 tightly contacts the electric wires 14, 14a, 14b. Therefore, the flat cable 3, namely, the wiring harness 1 provided with the flat cable 3 can be small-sized.

Further, because the flat cable 3 is formed by weaving the plurality of electric wires 14, 14a, 14b and the elongated weft 15 interlaced in a certain rule, an outer diameter and the number of the electric wires 14, 14a, 14b woven with the weft 15 can be easily changed. Therefore, the conductors having various shapes can be integrated without increasing the production cost.

Further, because the second parallel section 15d is caught by the crossing sections 15a, 15c, while the weft 15 is movable in the longitudinal direction of the electric wires 14, 14a, 14b, the weft 15 is prevented from separating from the electric wires 14, 14a, 14b.

Because the wiring harness 1 of this embodiment includes the above flat cable 3, the number of the components of the wiring harness 1 can be reduced, and the wiring harness 1 can be small-sized.

The above flat cable 3 includes the plurality of electric wires 14, 14a, 14b having the same outer diameters. However, according to the present invention, as shown in Fig. 5, as the electric wires 14, 14a, 14b defining the flat cable 3, the electric wires 14, 14a, 14b having the different outer diameters can be properly selected. Incidentally, in Fig. 5, an outer diameter of one electric wire 14b positioned at the topmost in Fig. 5 is larger than those of the other electric wires 14, 14a, and the outer diameters of the electric wires 14, 14a are the same. Namely, in a case shown in Fig. 5, outer diameters of at least two electric wires are different from each other. Further, in Fig. 5, the same components as the above embodiments are denoted by the same reference signs, and an explanation thereof is omitted.

In this case shown in Fig. 5, outer diameters of at least two among the plurality of electric wires 14, 14a, 14b are different from each other. Therefore, the electric wires 14, 14a, 14b having necessary diameters can be properly used. Therefore, the conductors having various shapes can be surely integrated without increasing the production cost.

Further, in the flat cable 3 of the above embodiment, the weft 15 is woven with respect to only the plurality of electric wires 14, 14a, 14b. However, according to the present invention, as shown in Fig. 6, a warp 16 may be provided in between the plurality of electric wires 14, 14a, 14b. In this case shown in Fig. 6, the configuration of the warp 16 may be completely the same as the weft 15 or may be different from the weft 15. Further, the material of the warp 16 may be the same as the weft 15, and may be different from the weft 15. Incidentally, as the material of the warp 16, one or more materials can be properly selected and used from among the materials used for defining a conventional woven (fabric) such as polyester, polyamide resin, polypropylene, cotton, carbon, metal, or the like. Further, in the case shown in Fig. 6, the crossing sections 15a, 15c alternately rises and falls with respect to the plurality of electric wires 14, 14a, 14b and the warp 16. Further, in Fig. 6, the same components as the above embodiments are denoted by the same reference signs, and an explanation thereof is omitted. Further, a plurality of warps 16 may be provided in between the electric wires 14, 14a, 14b adjacent to each other.

In the case shown in Fig. 6, the warp 16 made of the same material as the weft 15 is provided in between the plurality of electric wires 14, 14a, 14b. Therefore, the tensile stress and the bending stress acting on the flat cable 3 can be born by the warp 16. Therefore, the mechanical strength of the flat cable 3 can be improved.

In the above embodiment, the wiring harness 1 arranged in a vehicle is provided. However, according to the present invention, the wiring harness 1 can be used not only for a vehicle but also for an electronic device and an electric machine such as a portable computer or a mobile terminal.

Further, according to the present invention, the weft 15 can be woven with respect to the plurality of electric wires 14, 14a, 14b by not only a weave shown in the above embodiment, but also the other weaves such as plane weave, twill weave, or satin weave. Further, even in a case of the weave shown in the above embodiment, at the crossing sections 15a, 15c, the weft 15 may be woven in a manner to rise and fall with respect to some of the plurality of electric wires 14, 14a, 14b and the warp 16 by a certain rule.

Incidentally, the above embodiment only shows a representative example of the present invention. The present invention is not limited to the embodiment. Namely, various modifications can be practiced within a scope of the present invention.

### [Reference Signs List]

- 1: wiring harness
- 2: connector
- 3: flat cable
- 5: female terminal (terminal fitting)
- 14, 14a, 14b: electric wire
- 15: weft
- 15a: crossing section
- 15b: parallel section
- 15c: second crossing section (crossing section)
- 15d: second parallel section (parallel section)
- 15e: third parallel section (parallel section)
- 16: warp

## Claims

1. A flat cable comprising:
a plurality of electric wires parallel to each other, and terminals being attached to ends thereof; and
an elongated weft provided with crossing sections perpendicular to the plurality of electric wires and rising and falling with respect to the plurality of electric wires by a certain rule, and parallel sections continuous with the crossing sections and overlapping the electric wires positioned at an edge of the plurality of electric wires,
wherein the electric wires are tightly woven with the weft so as to prevent the weft from moving along a longitudinal direction of the electric wires relative to the electric wires.

2. The flat cable as claimed in claim 1,
wherein outer diameters of at least two electric wires among the plurality of electric wires are different from each other.

3. The flat cable as claimed in claim 1 or claim 2,
further comprising a warp disposed parallel to the plurality of electric wires in between the plurality of electric wires.

4. A wiring harness comprising:
a flat cable having a plurality of electric wires parallel to each other; and
a connector attached to an end of the flat cable,
wherein as the flat cable, the flat cable claimed in any one of claims 1 to 3 is provided.
